# EUROPÄISCHE PATENTSCHRIFT

(11) **EP 3 138 825 B1**
(45) Veröffentlichungstag und Bekanntmachung des Hinweises auf die Patenterteilung: **14.08.2019**
(21) Anmeldenummer: 16187079.5
(22) Anmeldetag: 02.09.2016
(51) Int. Cl.: C04B 28/02, C04B 41/00, C04B 41/48, C04B 41/52

(54) **BESCHICHTUNGSSYSTEM FÜR BETONOBERFLÄCHEN**
COATING SYSTEM FOR CONCRETE SURFACES
SYSTÈME DE REVÊTEMENT POUR SURFACES DE BÉTON

(30) Priorität: 04.09.2015 DE 102015216967
(43) Veröffentlichungstag der Anmeldung: 08.03.2017
(73) Patentinhaber: Dresdner Lackfabrik novatic GmbH Co. KG, 01099 Dresden (DE)
(72) Erfinder: Zill, Alexander, 01445 Radebeul (DE); Rother, Joachim, 14532 kleinmachnow (DE); Braun, Alexander, 06386 Osternienburger Land OT Großpaschleben (DE); Zill, Wilfried, 01324 Dresden (DE)
(74) Vertreter: Kailuweit & Uhlemann Patentanwälte Partnerschaft mbB

(56) Entgegenhaltungen:
- EP-A2- 0 615 965
- DE-B4-102007 014 636
- JP-A- 2010 188 239

## Beschreibung

Die Erfindung betrifft ein Beschichtungssystem für Betonoberflächen umfassend eine Grundbeschichtung mit einem lösemittelfreien 2K-EP-Beschichtungsstoff und einer Deckbeschichtung, wobei die Deckbeschichtung ausgewählt ist aus einer Deckbeschichtung umfassend einen lösemittelfreien 2K-EP-Beschichtungsstoff oder einen wasserverdünnbaren 2K-Polyurethan-Lack basierend auf einem hydroxyfunktionellen Acrylharz oder einen High-Solid-2K-Polyurethanlack auf Polyaspartic- oder Polyol-Basis.

Die materialspezifischen Eigenschaften des Betons verlangen alkalibeständige und festhaftende Beschichtungen. Damit selektieren sich insbesondere geeignete Polymere als Filmbildner und Farbstoffe. Es resultieren unterschiedliche Beschichtungssysteme mit unterschiedlichem Schutzvermögen.

So sind beispielsweise Beschichtungssysteme für Beton- Windkrafttürme bekannt, welche aus mehreren Schutzschichten mit unterschiedlichen Funktionen bestehen. Das Schutzsystem muss der spezifischen atmosphärischen Beanspruchung am Aufstellungsort des Windkraftturmes entsprechen und die Hauptfunktionen Haftfestigkeit hohe Sperrwirkung gegenüber atmosphärischer Einwirkung, Langzeitwetterbeständigkeit mit UV-Beständigkeit und demzufolge ein langzeitig gutes dekoratives Verhalten (Glanz- und Farbtonbeständigkeit) sichern.

Das Beschichtungssystem muss neben der sehr guten Wetterbeständigkeit zusätzlich beständig gegen biologische Korrosion sein, die insbesondere auf der Wetterseite auftreten kann.

Erstbeschichtungen auf Betonoberflächen müssen gut benetzen und in die Oberflächen penetrieren, eine hohe Adhäsion auf Beton erreichen und eine hohe Alkalibeständigkeit besitzen, so dass langzeitig eine große Haftfestigkeit resultiert. Die Erstbeschichtungen müssen bei einem Restwassergehalt von bis zu 4 Gew.% im Beton aushärten und eine fehlerfreie Beschichtung ergeben. Die Haftfestigkeit der Erstbeschichtung sollte bei Abreißprüfungen vollflächigen Betonausbruch zur Sicherung einer langzeitig guten Haftung und damit Haftung über die Lebensdauer des Beton-Windkraftturmes ermöglichen.

Üblicherweise werden vielschichtige Beschichtungssysteme appliziert, in insgesamt hohen Schichtdicken bis 700 µm.

Hohe Arbeitsaufwendungen und Kosten zur Applizierung der derzeitig üblichen Systeme, bestehend aus mehrfachen Schichten, mit einer Gesamtschichtdicke bis 700 µm charakterisieren den technischen Stand der Systeme zur Beschichtung von Beton-Windkrafttürmen.

So offenbart die DE 10 2007 014 636 B4 ein Sandwich-Schutzsystem für Betonoberflächen von Türmen für Windenergieanlagen, bestehend aus einer Grundschicht aus Epoxidharz, einer Zwischenschicht aus Glasvlies und einer Deckschicht aus Polyurethan dadurch gekennzeichnet, dass das Sandwich-Schutzsystem als Grundbeschichtung aus einem lösungsmittelfreien 2 Komponenten Epoxidharz Beschichtungsstoff mit darin einzuarbeitenden Glasvlies oder Glasgewebe besteht, auf die im nicht ausgehärteten, klebrigen Zustand ein wasserverdünnbarer 2K-Polyurethan Beschichtungsstoff appliziert wird. Die Aushärtung der Deckbeschichtung erfolgt hierbei innerhalb von 24 Stunden.

Weiterhin offenbart die DE 10 2012 203 280 A1 ein Beschichtungssystem zur Beschichtung einer Betonoberfläche, insbesondere Betonoberflächen von Türmen für Windenergieanlagen, umfassend eine Spachtelschicht, umfassend einen Beschichtungsstoff, enthaltend einen lösungsmittelfreien 2K-Polyharnstoff und eine Deckschicht, umfassend einen Beschichtungsstoff, enthaltend einen lösungsmittelarmen 2K-Polyharnstoff, wobei die Spachtelschicht eine Grundierungsfunktion aufweist und nach der Applikation weitestgehend entfernt wird.

Die EP 0 615 965 A2 offenbart eine Beschichtung für Betonoberflächen bestehend aus flüssigem Epoxidharz, einer hydrophobe Polyaminverbindung, einem Thixotropiermittel und einem Silankupplungsmittel.

Schließlich offenbart die JP 2010188239 ein Verfahren zur Herstellung einer Korrosionsschutzbeschichtung für Metalle und Stahlkonstruktionen. Der Korrosionsschutzfilm wird aus einer Grundbeschichtung und Deckschicht gebildet, wobei die Grundbeschichtung ein High Solid Epoxid enthält und die Deckschicht auf einem lösungsmittelbasierten High Solid Polyurethan Material basiert.

Die im Stand der Technik bekannten Beschichtungssysteme für Betonoberflächen weisen den Nachteil auf, dass die längere Aushärtungszeiten und einen Mehraufwand bei der Applikation aufgrund der geringen fehlerfrei applizierbaren Schichtdicken aufweisen.

Der Erfindung liegt daher die Aufgabe zugrunde ein Beschichtungssystem für Betonoberflächen anzugeben, welches eine kürzere Aushärtungszeit der Deckbeschichtung, eine verbesserte Frühwasserbeständigkeit, eine hohe Beständigkeit gegenüber Umwelteinflüssen aufweist und leicht verarbeitbar ist.

Die Aufgabe wird durch die unabhängigen Ansprüche gelöst. Vorteilhafte Ausgestaltungen sind in den abhängigen Ansprüchen angegeben.

Ein erster Aspekt der Erfindung betrifft ein Beschichtungssystem für Betonoberflächen umfassend
- eine Grundbeschichtung mit einem lösemittelfreien 2K-EP-Beschichtungsstoff bestehend aus niedrigmolekularem EP-Harz, gehärtet mit einem modifiziertem cycloaliphatischen Polyamin und
- eine Deckbeschichtung, wobei die Deckbeschichtung ausgewählt ist aus einer Deckbeschichtung
   - umfassend einen wasserverdünnbaren 2K-Polyurethan-Lack basierend auf einem High-Solid-2K-Polyurethanlack auf Polyaspartic- oder Polyol-Basis.

Dabei wird zunächst die Grundbeschichtung auf die Betonoberfläche appliziert und nachfolgend die Deckbeschichtung auf die Grundbeschichtung appliziert. Bevorzugt erfolgt die Applikation der Deckbeschichtung nass-in-nass auf die Grundbeschichtung.

Unter einem 2K-EP-Beschichtungsstoff wird dabei im Sinne der vorliegenden Erfindung ein Zweikomponenten Beschichtungsstoff mit einem Epoxidharz (EP) und einem Härter verstanden, der entsprechend einem vorgegebenen Mischungsverhältnis zu mischen ist. Zur Formulierung eignen sich erfindungsgemäß niedermolekulare, flüssige Bisphenol A- und Bisphenol F-Epoxidharze oder deren Mischungen mit einem Epoxid-Äquivalent (g/Äquiv.) kleiner 220.

Lösemittelfrei im Sinne der Erfindung bedeutet, dass der Beschichtungsstoff Lösungsmittel weder in den Grundstoffen enthält, noch bei der Herstellung zugesetzt werden. Ein minimaler Lösemittelanteil (≤ 0,5 Gew.%) kann aus Verunreinigungen resultieren (GISCODE D 1).

Unter einem Lösemittel im Sinne der Erfindung werden Lösungsmittel im Sinne der TRGS (Technische Regeln für Gefahrstoffe) 610 der Bundesanstalt für Arbeitsschutz und Arbeitsmedizin (BAuA) verstanden, nach der nur flüchtige organische Lösungsmittel mit einem Siedepunkt bis 200 °C als Lösungsmittel bezeichnet werden, die bei Normalbedingungen (20 °C und 101,3 kPa) flüssig sind und dazu verwendet werden, andere Stoffe zu lösen oder zu verdünnen, ohne sie chemisch zu verändern.

Erfindungsgemäß umfasst der 2K-EP- Beschichtungsstoff als EP-Flüssigharz ein niedrigmolekulares Bisphenol A/F-Harz, Bisphenol A-Harz oder Bisphenol F-Harz, mit einer EP-Äquivalent-Masse von kleiner 220. Die Epoxid-Äquivalentmasse ist diejenige Masse eines Epoxidharzes, welche genau ein Mol Epoxid-Gruppen enthält. (Einheit: g/mol).

In einer weiteren Ausführungsform der Erfindung enthält der 2K-EP- Beschichtungsstoff als Reaktivverdünner niederviskose Glycidether, aliphatischer Alkohole und Alkylphenole. Als niedrigviskose Glycidether werden Monoglycidether auf Basis 2-Ethylhexanol und Diglycidether auf Basis Polyoxypropylenglycol genutzt.

In einer weiteren Ausführungsform der Erfindung enthält der 2K-EP-Beschichtungsstoff als Härter ein modifiziertes cycloaliphatisches Aminaddukt mit einem Amin-Äquivalent (g/Äqu.) von 60 bis 100. Bevorzugt beträgt das Mischungsverhältnis der Harz : Härter-Komponenten 5 : 1.

In einer weiteren Ausführungsform der Erfindung ist der 2K-EP-Beschichtungsstoff unpigmentiert oder pigmentiert mit Füllstoffen und farbgebenden Pigmenten im Anteil von 40 Gew% bis 60 Gew% strukturviskos formuliert.

In einer weiteren Ausführungsform der Erfindung basiert der lösemittelfreie 2K-EP-Beschichtungsstoff auf einem Bisphenol A/F-Harz mit einer EP-Äquivalent-Masse kleiner 500, einem reaktiven Verdünner und einem modifiziertem cycloaliphatischen Polyamin mit einem Amin- Äquivalent von 95 g/Äqu., thixotropiert mit hydriertem Ricinusöl und Bentone 38, wobei das Mischungsverhältnis der Harz : Härter-Komponente 5 : 1 beträgt.

In einer weiteren Ausführungsform der Erfindung wird der 2K-EP-Beschichtungsstoff als Deckbeschichtung mit einer Nassschichtdicke von 150 µm bis 250 µm aufgetragen. Dabei erfolgt die Applikation bevorzugt etwa 60 min nach der Applikation der Grundbeschichtung, sodass eine nass-in-nass Beschichtung erfolgt. Die Deckbeschichtung mit dem 2K-EP-Beschichtungsstoff weist eine außerordentlich gute Wasser-, Öl-, Benzin- und Dieselbeständigkeit auf, ist gegen viele anorganische saure und alkalische Medien beständig und dekontaminierbar. Die Deckbeschichtung mit dem 2K-EP-Beschichtungsstoff kann dabei bevorzugt als Beschichtung im Innenbereichen, Klärbecken, Abwasserkanälen, etc. fungieren, wenn keine Anforderungen an die langzeitige Farbtonbeständigkeit gestellt werden und der Schwerpunkt auf dem Langzeitschutzverhalten liegt.

In einer weiteren Ausführungsform der Erfindung weist die Grundbeschichtung eine Nassschichtdicke von 350 µm bis 500 µm auf.

In einer weiteren Ausführungsform der Erfindung basiert wasserverdünnbare 2K-Polyurethanlack auf einer wässrigen, hydroxylgruppenhaltigen Acrylharzemulsbn mit einer Hydroxylzahl im Bereich von 70 - 125 mgKOH/g. Bevorzugt liegt der pH-Wert dieser Acrylharzemulsion zwischen 7,0 und 8,5 liegen.

In einer Ausführungsform der Erfindung erfolgt die Vernetzung/Härtung mit der hydroxylgruppenhaltigen Acrylharzemulsion oder des High-Solid- 2K-Polyurethanlacks auf Basis von Polyaspartic oder Polyol mit einer Isocyanatkomponente. Geeignete Isocyanatkomponenten sind aromatische und aliphatische Diisocyanate ausgewählt aus einer Gruppe aus 2,4-Toluylendiisocyanat und 2,6-Toluylendiisocyanat (TDI), 4,4-Diisocyanatoodiphenylmethan (MDI), p-Phenylendiisocyanat (PPDI), Tetramethylenxylylendiisocyanat (TMXDI), m-Xylylendiisocyanat (XDI), 1,6-Hexamethylendiisocyanat (HDI), 1,3-Cyclohexyldiisocyanat, 1,4-Cyclohexyldiisocyanat (CHDI), 4,4'-Diisocyanatodicyclohexylmethan (H(12)MDI), 2,2,4-und/oder 2,4,4-Trimethyl-1,6-hexamethylendiisocyanat (TMDI), Dodecamethylendiisocyanat, 1,4-Diisocyanatcyclohexan oder 1-Isocyanato-3,5,5-trimethyl-3-isocyanato-methylcyclohexan (IPDI), bevorzugt 1,6-Hexamethylendiisocyanat (HDl).

In einer Ausgestaltung ist die Isocyanatkomponente ein aliphatisches HexamethylenDiisocyanat trimer (HDI) homopolymer, welches mit der hydroxylgruppenhaltigen Acrylharzemulsion im Verhältnis 50 : 7,5 gemischt wird.

Der wasserverdünnbare 2K-Polyurethanbeschichtungsstoff erfordert ein Mischungsverhältnis (Stamm : Härter) wie 10 : 1. Dieser wasserverdünnbare 2K-Polyurethanlack besitzt außerordentlich gute Eigenschaften bezüglich Haftung, Elastizität, Glanzhaltung, Farbtonstabilität und Wetterbeständigkeit. Der wasserverdünnbare 2K-Polyurethanlack kann je nach Forderung glatt und in Struktur appliziert werden. Die Applikation m Airless-Spritzverfahren ermöglicht in einmaligem Auftrag eine Trockenschichtdicke von 80µm bis 120 µm. Die Applikation im Rollverfahren erfordert hierfür 2 Arbeitsgänge mit jeweils Nassschichtdicken von 100 µm bis 120 µm. Der Deckbeschichtungsstoff härtet innerhalb von 4 Stunden und ist danach bereits beständig gegenüber Nassbelastung. Hieraus resultieren ein deutlich schnellerer Fertigungsdurchlauf und damit indirekt eine Kapazitätserweiterung sowie eine Reduzierung der Fertigungsaufwendungen. Die Oberflächenhärte ist ebenfalls deutlich höher gegenüber dem im Stand der Technik bekannten wasserverdünnbaren 2K-PUR-Deckbeschichtungen.

In einer weiteren Ausführungsform der Erfindung wird der High-Solid- 2K-Polyurethanlack auf Basis von Polyaspartic mit einer Isocyanatkomponente gehärtet.

Polyaspartic bezeichnet erfindungsgemäß Polyasparaginsäureester ausgewählt aus einer Gruppe aus N,N'-(2-methyl-1,5-pentadiyl)bis-, 1,1'4,4'-tetraethylester und/oder N,N'-(methylendi-4,1-cyclohexandiyl)bis-, 1,1'4,4'-tetraethylester und/oder N,N'-(methylenbis(2-methyl-4,1-cyclohexandiyl)bis-, 1,1'4,4'-tetraethylester.

In einer weiteren Ausführungsform der Erfindung wird der High-Solid- 2K-Polyurethanlack auf Basis von Polyaspartic mit Hexamethylen-1,6-diisocyanat im Mischungsverhältnis 3 : 1 gehärtet. Der High-Solid 2K-PUR-Lack kann je nach Forderung glatt und in Struktur appliziert werden. Die Applikation im Airless-Spritzverfahren ermöglicht in einmaligem Auftrag eine Trockenschichtdicke von 100 µm bis 275 µm.

Durch Einsatz eines High-Solid 2K-Polyurethan-Lackes auf Polyasparticbasis ist es möglich deutlich dickere Schichten pro Arbeitsgang (Rollen oder Airless-Spritzen) fehlerfrei aufzutragen, was bei klassischen wasserverdünnbaren 2K-Polyurethanlacken chemisch nicht möglich ist. Die applizierte Schichtdicke bestimmt das langzeitige Schutzverhalten. Bekannte 2K-Polyurthanlacke können gemäß technischem Stand in Trockenschichtdicken zwischen 60µm und maximal 150 µm fehlerfrei appliziert werden. Der gemäß dieser Erfindung genutzte High-Solid- 2K-Polyurethanlack auf Polyasparticbasis kann fehlerfrei bis 275 µm appliziert werden. Hieraus resultieren geringere Arbeitsaufwendungen, da in einem Arbeitsgang erforderliche hohe Schichtdicken fehlerfrei aufgetragen werden können. Ein weiterer wesentlicher Vorteil ist die sehr schnelle Trocknung und Härtung der Beschichtung. Eine Frühwasserbeständigkeit wird bereits nach 4 Stunden erreicht. Die Oberflächen sind gegenüber dem wv 2K-Polyurethanlack gemäß Patent DE 10 2007 014 636 B4 mechanisch deutlich stärker belastbar. Sie weisen eine verbesserte Langzeitwetterbeständigkeit auf.

In einer Ausführungsform der Erfindung ist das Polyol des High-Solid-2K-Polyurethanlack auf Polyol-Basis ausgewählt aus einer Gruppe aus Polyether, Polyester, verzweigten Polyether-Ester-Polyol Polylactone, Polyacrylate, Polyepoxide, Polyamine oder Polythiole. Dabei enthalten verzweigten Polyether-Ester-Polyole als Polyole sowohl Polyester- als auch Polyetherstrukturen.

Die resultierende Deckbeschichtung weist eine hohe Dehnbarkeit von mindestens 60%, bei hoher Reißfestigkeit und sehr guter Haftung auf verschiedenen Untergründen auf, wie z.B. dem spezifischen Betonuntergrund, einem Epoxy-Tiefgrund und Polyaspartic-Beschichtungen auf. Die Beschichtung erreicht nach kurzer Trocknung/Härtung bereits nach 4 Stunden die Frühwasserfestigkeit mit Ausbildung einer stark hydrophoben Oberfläche.

In einer Ausführungsform der Erfindung ist das Polyol des High-Solid-2K-Polyurethanlacks auf Polyol-Basis ein verzweigtes Polyetherester-Polyol.

In einer Ausgestaltung der vorbeschriebenen Ausführungsform wird der High-Solid- 2K-Polyurethanlack auf Basis von Polyol mit einer Isocyanatkomponente, bevorzugt Hexamethylen-1,6-diisocyanat im Mischungsverhältnis 3 : 1 gehärtet.

In einer weiteren Ausführungsform der Erfindung umfasst die Deckbeschichtung des wasserverdünnbare 2K-Polyurethanlacks ein Pigmentgemisch bestehend aus Titandioxid 18Gew.%, Schwerspat 10Gew%, Talkum 7Gew %, Farbstoffen und Rheologieadditive auf Polyurethanbasis.

In einer weiteren Ausführungsform der Erfindung umfasst die Deckbeschichtung des High-Solid- 2K-Polyurethanlacks weiterhin ein Pigmentgemisch bestehend aus Titandioxid 20 Gew-%, Calplex 10Gew-%, Talkum 5Gew-%, Farbstoffen und Verdicker auf Polyurethanbasis.

In einer weiteren Ausführungsform der Erfindung ist zwischen der Grundbeschichtung und der Deckbeschichtung eine Zwischenschicht angeordnet, wobei als Zwischenschicht ein Glasvlies/Glasgewebe mit einem spezifischen Gewicht von 45g/m² bis 150g/m² angeordnet wird. Dabei wird das Glasvlies/Glasgewebe unmittelbar nach Auftrag der Grundbeschichtung in diese eingearbeitet.

Die erfindungsgemäßen Harze und Harzkombinationen, in Verbindung mit aliphatischen Polyisocyanaten, wie zum Beispiel HDl, ergeben überraschenderweise rißüberbrückende Beschichtungen auf dem Spezialbeton von Windkrafttürmen, die während der Betriebszet auftreten.

Ein weiterer Aspekt der Erfindung betrifft ein Verfahren zur Applikation des erfindungsgemäßen Beschichtungssystems.

Das Verfahren zur Applikation des erfindungsgemäßen Beschichtungssystems umfasst dabei die Schritte:
- Applikation einer Grundbeschichtung mit einem lösemittelfreien 2K-EP-Beschichtungsstoff bestehend aus niedrigmolekularem EP-Harz, gehärtet mit einem modifiziertem cycloaliphatischen Polyamin wobei der 2K-EP-Beschichtungsstoff als EP-Flüssigharz ein niedrigmolekulares Bisphenol A/F-Harz, Bisphenol A-Harz oder Bisphenol F-Harz, mit einer EP-Äquivalent-Masse von kleiner 220 umfasst und
- nachfolgend Applikation einer Deckbeschichtung, wobei die Deckbeschichtung ausgewählt ist aus einer Deckbeschichtung
   - umfassend einen wasserverdünnbaren 2K-Polyurethan-Lack basierend auf einem Higf-f-Solid-2K-Polyurethanlack auf Polyaspartic- oder Polyol-Basis.

In einer Ausführungsform der Erfindung erfolgt vor der Applikation der Grundbeschichtung eine Reinigung der Betonoberfläche, sodass Staub und Verunreinigungen von der Betonoberfläche entfernt werden.

In einer weiteren Ausführungsform der Erfindung erfolgt die Applikation der Grundbeschichtung bei einem Restwassergehalt von unter 4 Gew.-%.

In einer weiteren Ausführungsform der Erfindung erfolgt die Applikation der Grundbeschichtung durch Rollen oder Spritzapplikationen, wie Hochdruck-, Airless-, Airmix-Spritzverfahren appliziert.

In einer weiteren Ausführungsform der Erfindung wird die Deckschicht durch Rollen oder Spritzapplikationen, wie Hochdruck-, Airless-, Airmix-Spritzverfahren appliziert.

In einer weiteren Ausführungsform der Erfindung wird die Grundbeschichtung in einer Nassschichtdicke von 200 µm bis 500 µm, bevorzugt 350 µm bis 500 µm aufgetragen.

In einer weiteren Ausführungsform der Erfindung wird nach Applikation der Grundbeschichtung eine Zwischenschicht aus einem Glasvlies/Glasgewebe mit einem spezifischen Gewicht von 45 g/m² bis 150 g/m² angeordnet.

Ein weiterer Aspekt der Erfindung betrifft die Verwendung eines erfindungsgemäßen Beschichtungssystems zur Beschichtung von Betonoberflächen sowie ein Verfahren zur Applikation des erfindungsgemäßen Beschichtungssystems.

Das erfindungsgemäße Beschichtungssystem ist je nach Erfordernis besonders geeignet eine effektive Beschichtung von Betonoberflächen zu gewährleisten. Nachfolgend sollen exemplarisch einige Anwendungsmöglichkeiten wiedergegeben werden:
Abwasseranlagen, Klärbecken, Auffangwannen unter Tankanlagen und Pumpstationen/Verteilerstationen, Betonschutz in Chemieanlagen (Wände), Kühlwassertürme, Betonschutz in Tierproduktionsanlagen (Wände), Sanitärbereiche, Hygienebreiche, Krankenhäuser/dekontaminierbare Bauwerksbereiche, Fassaden/Fassadenelemente zur Rißüberbrückung und/oder dekorativen Gestaltung, Straßenbrücken, Biogasanlagen, Rottehallen, Straßentunnel/Autobahntunnel.

Zur Realisierung der Erfindung ist es auch zweckmäßig, die vorbeschriebenen Ausführungsformen und Merkmale der Ansprüche zu kombinieren.

Nachfolgend soll die Erfindung anhand einiger Ausführungsbeispiele eingehender erläutert werden. Die Ausführungsbeispiele sollen dabei die Erfindung beschreiben ohne diese zu beschränken.

### AUSFÜHRUNGSBEISPIEL 1 (Vergleichsbeispiel)

In einem ersten Ausführungsbeispiel wird die Betonoberfläche vor der Beschichtung sorgfältig gereinigt. Dabei werden Staub und Verunreinigungen entfernt. Der Restwassergehalt sollte vor der Beschichtung unter 4 Gew.-% liegen.

Die Grundbeschichtung erfolgt mit dem erfindungsgemäßen lösemittelfreien 2K-EP-Beschichtungsstoff. Dieser basiert auf einem Bisphenol A/F-Harz mit einer EP-Äquivalent-Masse kleiner 500, einem reaktiven Verdünner und einem modifiziertem cycloaliphatischen Polyamin mit einem Amin- Äquivalent von 95 g/Äqu., thixotropiert mit hydriertem Ricinusöl und Bentone 38. Das Mischungsverhältnis der Harz : Härter-Komponente beträgt 5 : 1.

Der erfindungsgemäße lösemittelfreie 2K-EP-Beschichtungsstoff wird bei Nutzung als Grundbeschichtung in einer Nassschichtdicke von 350 µm bis 500 µm aufgetragen. In diese Schicht wird unmittelbar danach das Glasvlies, spezifisches Gewicht 50 g/m², eingearbeitet. Nachfolgend erfolgt die Überarbeitung des Glasvlies/Glasgewebe mit dem lösemittelfreie 2K-EP-Beschichtungsstoff als Deckbeschichtung mit einer Nassschichtdicke von 150 µm bis 250 µm. Die Applikation kann dabei nach 60 minutiger Zwischenstandzeit nass in nass mit dem lösemittelfreien 2K-EP-Beschichtungsstoff erfolgen.

In Innenbereichen, Klärbecken, Abwasserkanälen kann diese Beschichtung als Deckbeschichtung fungieren, wenn keine Anforderungen an die langzeitige Farbtonbeständigkeit gestellt werden und der Schwerpunkt das Langzeitschutzverhalten ist.

### AUSFÜHRUNGSBEISPIEL 2 (Vergleichsbeispiel)

In einem weiteren Ausführungsbeispiel erfolgt zunächst die sorgfältige Reinigung der Betonoberfläche vor der Beschichtung. Dabei werden Staub und Verunreinigungen entfernt. Der Restwassergehalt sollte vor der Beschichtung unter 4 Gew-% liegen.

Die Grundbeschichtung erfolgt mit dem erfindungsgemäßen lösemittelfreien 2K-EP-Beschichtungsstoff in einer Schichtdicke von 350 µm bis 500 µm. Die 2K-EP-Beschichtung basiert auf einem Bisphenol A/F-Harz mit einer EP-Äquivalent-Masse kleiner 500, einem reaktiven Verdünner und einem modifizierten, cycloaliphatischen Polyamin mit einem Amin-Äquivalent von 95 g/Äqu., thixotropiert mit hydriertem Ricinusöl und Bentone 38. Das Mischungsverhältnis der Harz : Härter-Komponenten beträgt 5 : 1.

Die Einarbeitung des Glasvlies, spezifisches Gewicht 50 g/m², ist in unterschiedlicher Ausführung möglich, wobei die Einbettung in die ca. 350 µm bis 500 µm dicke, vorgelegte lösemittelfreie EP-Beschichtung technologisch am effektivsten ist. Die Überarbeitung dieser Beschichtung mit dem wasserverdünnbaren 2K-Polyurethan-Lack erfolgt nach ca. 60 Minuten, dabei "nass in nass", da die EP-Beschichtung noch nicht gehärtet ist.

Der wasserverdünnbare 2K-Polyurethanlack basiert auf einer wässrigen, hydroxylgruppenhaltigen Acrylharzemulsion. Diese Acrylharzemulsion hat eine Hydroxylzahl im Bereich von 70 - 125 mgKOH/g. Der pH-Wert dieser Acrylharzemulsion soll zwischen 7,0 und 8,5 liegen. Die Vernetzung/Härtung mit der hydroxylgruppenhaltigen Acrylharzemulsion erfolgt mit einem aliphatischen Hexamethylen- Diisocyanat trimer (HDl) homopolymer im Verhältnis 50 : 7,5. Der wasserverdünnbare 2K-Polyurethanbeschtungsstoff erfordert ein Mischungsverhältnis (Stamm : Härter) wie 10 : 1. Diese PUR-Beschichtung besitzt außerordentlich gute Eigenschaften bezüglich Haftung, Elastizität, Glanzhaltung, Farbtonstabilität und Wetterbeständigkeit.

Der wasserverdünnbare 2K-PUR-Lack enthält in Mischung ein Pigmentgemisch bestehend aus Titandioxid 18Gew.%, Schwerspat 10Gew%, Talkum 7Gew %, Farbstoffen und Rheologieadditive auf Polyurethanbasis.

Der wasserverdünnbare 2K-PUR-Lack kann je nach Forderung glatt und in Struktur appliziert werden. Die Applikation im Airless-Spritzverfahren ermöglicht in einmaligem Auftrag eine Trockenschichtdicke von 80 µm bis 120 µm. Die Applikation im Rollverfahren erfordert hierfür 2 Arbeitsgänge mit jeweils Nassschichtdicken von 100 µm bis 120 µm.

### AUSFÜHRUNGSBEISPIEL 3 (Vergleichsbeispiel)

In einem weiteren Ausführungsbeispiel wird zunächst die Betonoberfläche vor der Beschichtung sorgfältig gereinigt, wobei Staub und Verunreinigungen entfernt werden. Der Restwassergehalt sollte zur Beschichtung unter 4 Gew.-% liegen.

Die Grundbeschichtung erfolgt mit dem erfindungsgemäßen lösemittelfreien 2K-EP-Beschichtungsstoff. Dieser basiert auf einem Bisphenol A/F-Harz mit einer EP-Äquivalent-Masse kleiner 500, einem reaktiven Verdünner und einem modifiziertem cycloaliphatischen Polyamin mit einem Amin- Äquivalent von 95 g/Äqu., thixotropiert mit hydriertem Ricinusöl und Bentone 38. Das Mischungsverhältnis der Harz : Härter-Komponente beträgt 5 : 1.

Der erfindungsgemäße lösemittelfreie 2K-EP-Beschichtungsstoff wird bei Nutzung als Grundbeschichtung in einer Nassschichtdicke von 350 µm bis 500 µm aufgetragen.

In diese Schicht wird unmittelbar danach das Glasvlies, spezifisches Gewicht 50 g/m², eingelegt.

Nach 60 Minuten erfolgt die Überarbeitung des Glasvlies, dabei möglich nass-in-nass, mit einem High-Solid- 2K-Polyurethanlack. Der High-Solid 2K-Polyurethan-Lack auf Basis Polyaspartic wird mit einem Hexamethylen-1,6-diisocyanat im Mischungsverhältnis 3 : 1 gehärtet wird. Der Ultra-High-Solid- 2K-PUR-Lack enthält in Mischung ein Pigmentgemisch bestehend aus Titandioxid 20 Gew-%, Calplex 10 Gew-%, Talkum 5 Gew-%, Farbstoffen und Verdicker auf Polyurethanbasis. Der High-Solid 2K-PUR-Lack kann je nach Forderung glatt und in Struktur appliziert werden. Die Applikation im Airless-Spritzverfahren ermöglicht in einmaligem Auftrag eine Trockenschichtdicke von 100 µm bis 275 µm.

In einer Ausgestaltung dieses Ausführungsbeispiels wird für die Deckbeschichtung statt dem High-Solid 2K-Polyurethan-Lack auf Basis Polyaspartic ein Polyol Decklack.

### AUSFÜHRUNGSBEISPIEL 4 (Vergleichsbeispiel)

In einem weiteren Ausführungsbeispiel erfolgt vor der Beschichtung eine sorgfältige Reinigung der Betonoberfläche, wobei Staub und Verunreinigungen entfernt werden. Der Restwassergehalt sollte vor der Beschichtung unter 4 Gew.-% liegen.

Die Grundbeschichtung erfolgt mit dem erfindungsgemäßen lösemittelfreien 2K-EP-Beschichtungsstoff. Dieser basiert auf einem Bisphenol A/F-Harz mit einer EP-Äquivalent-Masse kleiner 500, einem reaktiven Verdünner und einem modifiziertem cycloaliphatischen Polyamin mit einem Amin- Äquivalent von 95 g/Äqu., thixotropiert mit hydriertem Ricinusöl und Bentone 38. Das Mischungsverhältnis der Harz : Härter-Komponente beträgt 5 : 1.

Der erfindungsgemäße lösemittelfreie 2K-EP-Beschichtungsstoff wird bei Nutzung als Grundbeschichtung in einer Nassschichtdicke von 350 µm bis 500 µm aufgetragen.

Die Überarbeitung der Grundbeschichtung erfolgt nass- in nass nach einer Zwischenstandzeit von 60 Minuten, mit einem High-Solid- 2K-Polyurethanlack. Der Ultra-High-Solid 2K-Polyurethan-Lack auf Basis Polyaspartic wird mit einem Hexamethylen-1,6-diisocyanat im Mischungsverhältnis 3 : 1 gehärtet wird. Der High-Solid- 2K-PUR-Lack enthält in Mischung ein Pigmentgemisch bestehend aus Titandioxid 20 Gew-%, Calplex 10 Gew-%, Talkum 5 Gew-%, Farbstoffen und Verdicker auf Polyurethanbasis. Der Ultra-High-Solid 2K-PUR-Lack kann je nach Forderung glatt und in Struktur appliziert werden. Die Applikation im Airless-Spritzverfahren ermöglicht in einmaligem Auftrag eine Trockenschichtdicke von 100µm bis 275 µm.

In einer Ausgestaltung dieses Ausführungsbeispiels wird für die Deckbeschichtung statt dem High-Solid 2K-Polyurethan-Lack auf Basis Polyaspartic ein Polyol Decklack.

### AUSFÜHRUNGSBEISPIEL 5 (Vergleichsbeispiel)

In einem weiteren Ausführungsbeispiel basiert der High-Solid 2K-PUR-Lack erfindungsgemäß in Mischung aus der Stammkomponente, bestehend aus einem verzweigten Polyether-Ester-Polyol, mit einem High-Solid-Hydroxy-Acrylharz, einem Katalysator, einer Pigment-/Füllstoffkombination, sowie typischen Lackadditiven und einer Härterkomponente bestehend aus einem aliphatischen Polyisocyanat.

Die Stammkomponente enthält dabei ein hydroxylgruppenhaltiges Acrylharz mit einem Festkörpergehalt von 98% - 100% nach DIN EN ISO 3251 (%) und eine Hydroxylzahl von 90 bis 140 nach DIN 53240 (mg KOH/g) sowie ein Polyol, wobei das Polyol ein verzweigtes Polyether-Ester-Polyol mit einem Festkörpergehalt (Gew%) von 98 - 100% und einer Hydroxylzahl von 150 bis 220 nach DIN 53240 (mg KOH/g) ist.

Die Härterkomponente ist ein aliphatisches Polyisocyanat auf Basis HDl-Trimerisat mit einem NCO-Gehalt (%) von 20 - 25% und einer Viskosität von 1100 ± 400 (mPa*s) bei23°C nach DIN EN ISO 3219/A.3.

Der High-Solid 2K-Polyurethan-Lack auf Basis Polyether-Ester-Polyol ermöglicht die Applikation als Glattlack und Strukturlack, wobei erfindungsgemäß die Rheologie durch hydriertes Ricinusöl und/oder ein modifiziertes Hectorite eingestellt wird. Die Applikation kann durch Rollen oder Spritzen erfolgen.

Die Deckschicht aus dem High-Solid 2K-Polyurethan-Lack auf Basis Polyether-Ester-Polyol weist eine hohe Dehnbarkeit von mindestens 60%, bei hoher Reißfestigkeit und sehr guter Haftung auf verschiedenen Untergründen auf, wie z.B. dem spezifischen Betonuntergrund, einem Epoxy-Tiefgrund und Polyaspartic-Beschichtungen auf.

### AUSFÜHRUNGSBEISPIEL 6 (Vergleichsbeispiel)

In einem weiteren Ausführungsbeispiel wird als Deckbeschichtung ein High-Solid 2K-PUR-Lack basierend auf einer Mischung aus der Stammkomponente, bestehend aus einem verzweigten Polyether-Ester-Polyol, mit oder ohne einem High-Solid-Hydroxy-Acrylharz, einem Katalysator, einer Pigment-/Füllstoffkombination, sowie typischen Lackadditiven und einer Härterkomponente bestehend aus einem aliphatischen Polyisocyanat verwendet. Eine beispielhafte Formulierung einer Deckbeschichtung wiedergegeben:

**Stammkomponente:**

| | | |
|---|---|---|
| 1.) | Polyether-Ester-Polyol | 40,00 |
| 2.) | hydroxylgruppenhaltiges Acrylharz | 15,00 |
| 3.) | Byk E-410 | 1,00 |
| 4.) | Byk 085 | 0,60 |
| 5.) | Tinuvin 292 | 0,80 |
| 6.) | Tinuvin 1130 | 0,50 |
| 7.) | Thixatrol ST | 0,50 |
| 8.) | Bentone 38-Paste | 5,00 |
| 9.) | Titandioxid | 20,00 |
| 10.) | Flammruß | 0,10 |
| 11.) | Calciumcarbonat | 8,00 |
| 12.) | Butylacetat | 8,50 |
| | | 100,00 |

**Härterkomponente:**

| | | |
|---|---|---|
| 1.) | Desmodur N3600 | 80,00 |
| 2.) | Butylacetat | 20,00 |
| | | 100,00 |

Das Mischungsverhältnis von Stamm : Härter beträgt 2:1.

## Patentansprüche

1. Beschichtungssystem für Betonoberflächen umfassend
- eine Grundbeschichtung mit einem lösemittelfreien 2K-EP-Beschichtungsstoff bestehend aus niedrigmolekularem EP-Harz, gehärtet mit einem modifiziertem cycloaliphatischen Polyamin, wobei der 2K-EP-Beschichtungsstoff als EP-Flüssigharz ein niedrigmolekulares Bisphenol A/F-Harz, Bisphenol A-Harz oder Bisphenol F-Harz, mit einer EP-Äquivalent-Masse von kleiner 220 umfasst und
- eine Deckbeschichtung, wobei die Deckbeschichtung ausgewählt ist aus einer Deckbeschichtung
- umfassend einen wasserverdünnbaren 2K-Polyurethan-Lack basierend auf einem High-Solid-2K-Polyurethanlack auf Polyaspartic- oder Polyol-Basis.

2. Beschichtungssystem nach Anspruch 1 oder 2, **dadurch gekennzeichnet, dass** der 2K-EP-Beschichtungsstoff als Reaktivverdünner niederviskose Glycidether, aliphatischer Alkohole und Alkylphenole enthält.

3. Beschichtungssystem nach Anspruch 1 oder 2, **dadurch gekennzeichnet, dass** der 2K-EP-Beschichtungsstoff als Härter ein modifiziertes cycloaliphatisches Aminaddukt mit einem Amin-Äquivalent (g/Äqu.) von 60 bis 100 enthält.

4. Beschichtungssystem nach einem der vorhergehenden Ansprüche, **dadurch gekennzeichnet, dass** der 2K-EP-Beschichtungsstoff unpigmentiert oder pigmentiert mit Füllstoffen und farbgebenden Pigmenten im Anteil von 40 Gew-% bis 60 Gew% strukturviskos formuliert ist.

5. Beschichtungssystem nach einem der vorhergehenden Ansprüche, **dadurch gekennzeichnet, dass** der lösemittelfreie 2K-EP-Beschichtungsstoff auf einem Bisphenol A/F-Harz mit einer EP-Äquivalent-Masse kleiner 220, einem reaktiven Verdünner und einem modifiziertem cycloaliphatischen Polyamin mit einem Amin- Äquivalent von 95 g/Äqu., thixotropiert mit hydriertem Ricinusöl und Bentone 38 basiert, wobei das Mischungsverhältnis der Harz : Härter-Komponente 5 : 1 beträgt.

6. Beschichtungssystem nach einem der vorhergehenden Ansprüche, **dadurch gekennzeichnet, dass** die Grundbeschichtung eine Nassschichtdicke von 350 µm bis 500 µm aufweist.

7. Beschichtungssystem nach einem der Ansprüche 1 bis 6, **dadurch gekennzeichnet, dass** das Polyol des High-Solid-2K-Polyurethanlack auf Polyol-Basis ausgewählt aus einer Gruppe aus Polyether, Polyester, Polyetherpolyester, Polylactone, Polyacrylate, Polyepoxide, Polyamine oder Polythiole.

8. Beschichtungssystem nach einem der Ansprüche 1 bis 6, **dadurch gekennzeichnet, dass** der High-Solid- 2K-Polyurethanlack auf Basis von Polyaspartic mit einem Hexamethylen-1,6-diisocyanat im Mischungsverhältnis 3 : 1 gehärtet wird.

9. Beschichtungssystem nach einem der Ansprüche 1 bis 9, **dadurch gekennzeichnet, dass** die Deckbeschichtung des wasserverdünnbaren 2K-Polyurethanlacks ein Pigmentgemisch bestehend aus Titandioxid 18 Gew.%, Schwerspat 10 Gew%, Talkum 7 Gew %, Farbstoffen und Rheologieadditive auf Polyurethanbasis umfasst.

10. Beschichtungssystem nach einem der vorhergehenden Ansprüche, **dadurch gekennzeichnet, dass** zwischen der Grundbeschichtung und der Deckbeschichtung eine Zwischenschicht angeordnet ist, wobei als Zwischenschicht ein Glasvlies/Glasgewebe mit einem spezifischen Gewicht von 45 g/m² bis 150 g/m² angeordnet wird.

11. Verfahren zur Applikation eines Beschichtungssystems nach einem der Ansprüche 1 bis 10 umfassend dabei die Schritte:
- Applikation einer Grundbeschichtung mit einem lösemittelfreien 2K-EP-Beschichtungsstoff bestehend aus niedrigmolekularem EP-Harz, gehärtet mit einem modifiziertem cycloaliphatischen Polyamin, wobei der 2K-EP-Beschichtungsstoff als EP-Flüssigharz ein niedrigmolekulares Bisphenol A/F-Harz, Bisphenol A-Harz oder Bisphenol F-Harz, mit einer EP-Äquivalent-Masse von kleiner 220 umfasst und
- nachfolgend Applikation einer Deckbeschichtung, wobei die Deckbeschichtung ausgewählt ist aus einer Deckbeschichtung
- umfassend einen wasserverdünnbaren 2K-Polyurethan-Lack basierend auf einem High-Solid-2K-Polyurethanlack auf Polyaspartic- oder Polyol-Basis.

12. Verfahren nach Anspruch 11, **dadurch gekennzeichnet, dass** nach Applikation der Grundbeschichtung eine Zwischenschicht aus einem Glasvlies/Glasgewebe mit einem spezifischen Gewicht von 45 g/m² bis 150 g/m² angeordnet wird.

13. Verfahren nach einem der Ansprüche 11oder 12, **dadurch gekennzeichnet, dass** die Deckschicht durch Rollen oder Spritzapplikationen, wie Hochdruck-, Airless-, Airmix-Spritzverfahren appliziert wird.

14. Verfahren nach einem der Ansprüche 11 bis 13, **dadurch gekennzeichnet, dass** die Grundbeschichtung in einer Nassschichtdicke von 200 µm bis 500 µm, bevorzugt 350 µm bis 500 µm aufgetragen wird.

15. Verwendung eines Beschichtungssystems nach einem der Ansprüche 1 bis 10 zur Beschichtung von Betonoberflächen sowie eines Verfahrens zur Applikation des Beschichtungssystems nach einem der Ansprüche 11 bis 14 zur Applikation auf Betonoberflächen.

## Claims

1. Coating system for concrete surfaces, comprising
- a base coat having a solvent-free 2K EP coating material consisting of EP resin with a low molecular weight cured by a modified cycloaliphatic polyamine, wherein the 2K EP coating material comprises, as an EP liquid resin, a bisphenol A/F resin, bisphenol A resin or bisphenol F resin with a low molecular weight, having an EP equivalent mass of less than 220, and
- a top coat, wherein the top coat is selected from a top coat
- comprising a water-dilutable 2K polyurethane paint based on a polyaspartic-based or polyol-based high-solids 2K polyurethane paint.

2. Coating system according to either claim 1 or claim 2, **characterised in that** the 2K EP coating material contains low-viscosity glycidyl ethers, aliphatic alcohols and alkylphenols as reactive diluting agents.

3. Coating system according to either claim 1 or claim 2, **characterised in that** the 2K EP coating material contains, as a curing agent, a modified cycloaliphatic amine adduct having an amine equivalent (g/eq.) of from 60 to 100.

4. Coating system according to any of the preceding claims, **characterised in that** the 2K EP coating material is formulated to be non-pigmented or pigmented by means of fillers and colouring pigments in a proportion of 40 wt.% to 60 wt.% pseudoplastic.

5. Coating system according to any of the preceding claims, **characterised in that** the solvent-free 2K EP coating material is based on a bisphenol A/F resin having an EP equivalent mass of less than 220, a reactive diluting agent and a modified cycloaliphatic polyamine having an amine equivalent of 95 g/eq., thixotroped with hydrogenated castor oil and Bentone 38, the mixing ratio of the resin:curing agent component being 5:1.

6. Coating system according to any of the preceding claims, **characterised in that** the base coat has a wet-film thickness of 350 µm to 500 µm.

7. Coating system according to any of claims 1 to 6, **characterised in that** the polyol of the polyol-based high-solids 2K polyurethane paint is selected from a group consisting of polyethers, polyesters, polyether polyesters, polylactones, polyacrylates, polyepoxides, polyamines or polythiols.

8. Coating system according to any of claims 1 to 6, **characterised in that** the polyaspartic-based high-solids 2K polyurethane paint is cured by a hexamethylene-1,6-diisocyanate in a mixing ratio of 3:1.

9. Coating system according to any of claims 1 to 9, **characterised in that** the top coat of the water-dilutable 2K polyurethane paint comprises a pigment mixture consisting of 18 wt.% titanium dioxide, 10 wt.% barite, 7 wt.% talc, dyes and polyurethane-based rheological additives.

10. Coating system according to any of the preceding claims, **characterised in that** an intermediate layer is arranged between the base coat and the top coat, a glass fleece/glass fabric having a relative density of from 45 g/m² to 150 g/m² being arranged as the intermediate layer.

11. Method for applying a coating system according to any of claims 1 to 10, comprising the steps of:
- applying a base coat having a solvent-free 2K EP coating material consisting of EP resin with a low molecular weight cured by a modified cycloaliphatic polyamine, the 2K EP coating material comprising, as an EP liquid resin, a bisphenol A/F resin, bisphenol A resin or bisphenol F resin with a low molecular weight, having an EP equivalent mass of less than 220, and
- subsequently applying a top coat, the top coat being selected from a top coat
- comprising a water-dilutable 2K polyurethane paint based on a polyaspartic-based or polyol-based high-solids 2K polyurethane paint.

12. Method according to claim 11, **characterised in that**, after applying the base coat, an intermediate layer of a glass fleece/glass fabric having a relative density of 45 g/m² to 150 g/m² is arranged.

13. Method according to either claim 11 or claim 12, **characterised in that** the top layer is applied by rollers or spray applications, such as high-pressure, airless and Airmix spray methods.

14. Method according to any of claims 11 to 13, **characterised in that** the base coat is applied in a wet layer thickness of from 200 µm to 500 µm, preferably 350 µm to 500 µm.

15. Use of a coating system according to any of claims 1 to 10 for coating concrete surfaces and use of a method for applying the coating system according to any of claims 11 to 14 for applying to concrete surfaces.

## Revendications

1. Système de revêtement de surfaces en béton, comprenant
- un revêtement de base comportant un matériau de revêtement 2K EP sans solvant constitué d'une résine EP à faible masse moléculaire durcie par une polyamine cycloaliphatique modifiée, le matériau de revêtement 2K EP comprenant, comme résine liquide EP, une résine bisphénolique A/F à faible masse moléculaire, une résine bisphénolique A ou bisphénolique F présentant une masse équivalente EP inférieure à 220 et
- un revêtement de finition, le revêtement de finition étant choisi parmi un revêtement de finition
- comprenant un vernis de polyuréthane 2K diluable à l'eau à base d'un vernis de polyuréthane 2K à teneur élevée en matières solides à base de polyaspartique ou de polyol.

2. Système de revêtement selon la revendication 1 ou 2, **caractérisé en ce que** le matériau de revêtement 2K-EP contient, comme diluant réactif du glycidéther à faible viscosité, des alcools aliphatiques et des alkylphénols

3. Système de revêtement selon la revendication 1 ou 2, **caractérisé en ce que** le matériau de revêtement 2K-EP contient, comme durcisseur, un produit d'addition d'amine cycloaliphatique modifié présentant un équivalent d'amine (g/équivalent) de 60 à 100.

4. Système de revêtement selon l'une des revendications précédentes, **caractérisé en ce que** le matériau de revêtement 2K EP est formulé par viscosité de structure de manière non pigmentée ou pigmentée avec des charges et des pigments colorants dans une proportion de 40 à 60 % en poids.

5. Système de revêtement selon l'une des revendications précédentes, **caractérisé en ce que** le matériau de revêtement 2K EP sans solvant est à base d'une résine bisphénolique A/F présentant une masse équivalente EP inférieure à 220, d'un diluant réactif et d'une polyamine cycloaliphatique modifiée présentant un équivalent d'amine de 95 g/équivalent, thixotrope d'huile de ricin hydrogénée et de bentone 38, le rapport de mélange résine : composant durcisseur étant de 5 : 1.

6. Système de revêtement selon l'une des revendications précédentes, **caractérisé en ce que** le revêtement de base présente une épaisseur de couche humide de 350 à 500 µm.

7. Système de revêtement selon l'une des revendications 1 à 6, **caractérisé en ce que** le polyol du vernis de polyuréthane 2K à teneur élevée en matières solides à base de polyol est choisi dans le groupe constitué du polyéther, du polyester, du polyéther-polyester, des polylactones, des polyacrylates, des polyépoxydes, des polyamines ou des polythiols.

8. Système de revêtement selon l'une des revendications 1 à 6, **caractérisé en ce que** le vernis de polyuréthane 2K à teneur élevée en matières solides à base de polyaspartique est durci par un diisocyanate-1,6 d'hexaméthylène dans le rapport de mélange 3 : 1.

9. Système de revêtement selon l'une des revendications 1 à 9, **caractérisé en ce que** le revêtement de finition du vernis de polyuréthane 2K diluable à l'eau comprend un mélange de pigments constitué de 18 % en poids de dioxyde de titane, de 10 % en poids de baryte, de 7 % en poids de talc, de colorants et d'additifs rhéologiques à base de polyuréthane.

10. Système de revêtement selon l'une des revendications précédentes, **caractérisé en ce qu'**une couche intermédiaire est disposée entre le revêtement de base et le revêtement de finition, un voile de verre/tissu de verre présentant une masse spécifique de 45 à 150 g/m² étant disposé comme couche intermédiaire.

11. Procédé d'application d'un système de revêtement selon l'une des revendications 1 à 10, comprenant les étapes :
- d'application d'un revêtement de base comportant un matériau de revêtement 2K EP sans solvant constitué d'une résine EP à faible masse moléculaire durcie par une polyamine cycloaliphatique modifiée, le matériau de revêtement 2K EP comprenant, comme résine liquide EP, une résine bisphénolique A/F à faible masse moléculaire, une résine bisphénolique A ou une résine bisphénolique F, présentant une masse équivalente EP inférieure à 220, et
- ensuite, d'application d'un revêtement de finition, le revêtement de finition étant choisi parmi un revêtement de finition
- comprenant un vernis de polyuréthane 2K diluable à l'eau à base d'un vernis de polyuréthane 2K à teneur élevée en matières solides à base de polyaspartique ou de polyol.

12. Procédé selon la revendication 11, **caractérisé en ce que**, après application du revêtement de base, une couche intermédiaire constituée d'un voile de verre/tissu de verre présentant une masse spécifique de 45 à 150 g/m² est disposée.

13. Procédé selon l'une des revendications 11 ou 12, **caractérisé en ce que** le revêtement de finition est appliqué au rouleau ou par pulvérisation, par exemple par des procédés de pulvérisation à haute pression, airless, airmix.

14. Procédé selon l'une des revendications 11 à 13, **caractérisé en ce que** le revêtement de base est appliqué dans une épaisseur de couche humide de 200 à 500 µm, de préférence de 350 à 500 µm.

15. Utilisation d'un système de revêtement selon l'une des revendications 1 à 10 pour le revêtement de surfaces en béton et d'un procédé d'application du système de revêtement selon l'une des revendications 11 à 14 pour l'application sur des surfaces en béton.
